# EUROPÄISCHE PATENTSCHRIFT

(11) **EP 1 708 920 B1**
(45) Veröffentlichungstag und Bekanntmachung des Hinweises auf die Patenterteilung: **02.06.2010**
(21) Anmeldenummer: 04805049.6
(22) Anmeldetag: 29.12.2004
(51) Int. Cl.: B63G 8/00

(54) **BRENNSTOFFZELLENEINRICHTUNG FÜR EIN U-BOOT**
FUEL CELL SYSTEM FOR A SUBMARINE
SYSTEME DE PILES A COMBUSTIBLE POUR SOUS-MARIN

(30) Priorität: 29.01.2004 DE 102004004623
(43) Veröffentlichungstag der Anmeldung: 11.10.2006
(73) Patentinhaber: SIEMENS AKTIENGESELLSCHAFT, 80333 München (DE)
(72) Erfinder: AHLF, Gerd, 91369 Wiesenthau (DE); EDER, Manfred, 91352 Schlammersdorf (DE); LERSCH, Josef, 91336 Heroldsbach (DE); MATTEJAT, Arno, 91056 Erlangen (DE)
(86) Internationale Anmeldenummer: PCT/EP2004/053724
(87) Internationale Veröffentlichungsnummer: WO 2005/073075

(56) Entgegenhaltungen:
- DE-A1- 10 224 015
- HAMMERSCHMIDT UND SATTLER: "Die Brennatoffzelle und Wasserstofferzeugung mittels Reformer" JAHRBUCH DER SCHIFFBAUTECHNISCHEN GESELLSCHAFT, BERLIN, DE, Bd. 92, 1998, Seiten 275-281, XP002201737 ISSN: 0374-1222
- SATTLER G: "Fuel cells going on-board" JOURNAL OF POWER SOURCES, ELSEVIER SEQUOIA S.A. LAUSANNE, CH, Bd. 86, Nr. 1-2, März 2000 (2000-03), Seiten 61-67, XP004194100 ISSN: 0378-7753
- SATTLER G: "WASSERSTOFFANTRIEBE FUR UBERWASSERSCHIFFE" SCHIFF UND HAFEN, SEEHAFEN-VERLAG ERIK BLUMENFELD. HAMBURG, DE, Bd. 49, Nr. 3, März 1997 (1997-03), Seiten 68-70, XP000686961 ISSN: 0938-1643

## Beschreibung

Die Erfindung betrifft eine Brennstoffzelleneinrichtung mit H₂-O₂-Brennstoffzellenmodulen für ein U-Boot mit zumindest einem elektrischen Propellermotor, einem Batteriesatz, einem Ladegenerator mit Antrieb und einem Energieversorgungssystem mit Stromschienen sowie Schalt- und Automatisierungseinrichtungen, wobei die Brennstoffzelleneinrichtung anforderungsgerecht Elektroenergie erzeugt, die einem Energieübertragungssystem aufgegeben wird und wobei die Brennstoffzelleneinrichtung als PEM-Einrichtung ausgebildet ist und insbesondere Elektroenergie auf dem Spannungsniveau des Energieübertragungssystems liefert.

Aus dem Prospekt der SIEMENS AG, Titel: ELECTRICAL SYSTEMS FOR SUBMARINES, 174 D 6076 WS 06011, ist auf Seite 10 unter der Überschrift: "AIR-INDEPENDENT PROPULSION" ein Antriebssystem für U-Boote beschrieben, dessen Brennstoffzelleneinrichtung dem Vorstehenden entspricht. Es ist Aufgabe der Erfindung, das aus dem Prospekt bekannte System mit seinen Brennstoffzellen-Modulen derart auszugestalten, dass es für U-Boote besonders geeignet ausgebildet ist. Die innerhalb des Systems gebildete Brennstoffzelleneinrichtung soll dabei insbesondere den Sicherheitsanforderungen, die an eine U-Boot-Antriebseinrichtung gestellt werden, entsprechen und dabei der Besatzung eine erhöhte Sicherheit im Gefechtsfall bieten. Darüber hinaus soll auch die Signatur, d.h. die Detektierbarkeit der elektrischen und elektromagnetischen Emissionen des U-Boots, verringert werden. Die Veröffentlichung von Hammerschmidt und Sattler: "Die Brenstoffzelle und Wasserstofferzeugung mittels Reformer "Jahrbuch der Schiffbautechnischen Gesellschaft, Berlin, DE, Bd, 92, 1998, Seiten 276-277, beschreibt eine brennstoffzelleneinrichtung für ein U-Boot.

Die Aufgabe wird durch die Merkmale des Anspruchs 1 gelöst. Die Aufgabe wird im wesentlichen dadurch gelöst, dass die PEM-Einrichtung aus Brennstoffzellen-Modulen besteht, die in sich schockfest ausgebildet sind und über schockfest ausgebildete Anschlüsse mit Wasserstoff und Sauerstoff versorgt werden. Durch die schockfeste Ausbildung der Brennstoffzellen-Module ergibt sich eine besondere Sicherheit des Betriebs im Gefecht, bei dem immer mit hohen Beschleunigungen aufgrund naher Explosionen gerechnet werden muss. Die schockfeste Ausbildung wird durch eine vorteilhaft robuste innere Ausführung mit höheren Materialdimensionen als es für den Betrieb notwendig wäre, und eine vorteilhafte gegenseitige Abstützung der einzelnen Modulkomponenten erreicht. Zusammen mit schockfest ausgebildeten Anschlüssen für Sauerstoff und Wasserstoff ergibt sich so eine Modulausbildung, die hohen Beschleunigungen widersteht. Damit wird eine Sicherheit erreicht, die fast die der eines Batteriesatzes entspricht.

In Ausgestaltung der Erfindung ist vorgesehen, dass die Brennstoffzelleneinrichtung aus Brennstoffzellen-Modulen besteht, die in nicht rostende, gasdichte Edelstahldruckbehälter einschiebbar ausgebildet sind, wobei die Edelstahldruckbehälter glattwandig ausgebildet werden. Durch diese Ausbildung der Brennstoffzellen-Module ergibt sich eine gasdichte Ausbildung der Brennstoffzellen-Module, so dass ein Wasserstoffaustritt in die Bootsatmosphäre mit Sicherheit verhindert wird. Die Verwendung von nicht rostenden Edelstahldruckbehältern ist dabei besonders vorteilhaft, da so auch die Langzeit-Dichtigkeit gewährleistet ist. Die Bootsatmosphäre kann korrosiv wirken. Die glattwandige Ausbildung sorgt dabei vorteilhaft sowohl für eine gute Einschiebbarkeit der einzelnen Brennstoffzelleninnenteile in die Druckbehälter als auch für eine gute Einschiebbarkeit der Edelstahldruckbehälter in ein Haltegerüst. Die glattwandige Ausführung ist dabei vorteilhaft korrosionssicher. Es können sich keine Ecken und Winkel bilden, in denen korrosiv wirkende Kondensate festgehalten werden.

In einer weiteren, besonders vorteilhaften Ausbildung der Erfindung ist vorgesehen, dass die Brennstoffzelleneinrichtung aus Brennstoffzellen-Modulen besteht, die ein internes Stromschienensystem aufweisen, das streufeldarm ausgeführt ist. Bei einem internen streufeldarmen Stromschienensystem sind die einzelnen Leiter so angeordnet, dass sich ihre Felder weitgehend gegeneinander aufheben. Beispielsweise wird ein Pluspol in dem Brennstoffzellen-Modul zwischen zwei Minuspolen angeordnet, insbesondere ausgangsseitig. Im Inneren wird mit einer modulinternen Verschienung gearbeitet, die eine Vier-Leiter-Anordnung aufweist, wobei auf jeder Seite des rechteckförmig ausgebildeten Moduls ein Leiterpaar (1 x Minus, 1 x Plus) angeordnet ist. Die auftretenden Felder kompensieren sich nicht vollständig, die Abstrahlung ist jedoch so gering, dass sie im Inneren des U-Bootes ohne weiteres hingenommen werden kann.

In weiterer Ausgestaltung der Erfindung ist vorgesehen, dass die Brennstoffzelleneinrichtung aus mehreren elektrisch in Reihe geschalteten Brennstoffzellen-Modulen und ggf. aus einem Reserve-Modul besteht, deren Anzahl wählbar ist und vom Spannungsniveau der Module und des Energieversorgungssystems abhängt. Durch die Verwendung mehrerer Module und ggf. eines Reserve-Moduls wird die Verfügbarkeit der Elektroenergie, die durch die Brennstoffzelleneinrichtung erzeugt wird, erheblich gesteigert. Es ist dabei vorgesehen, dass bei Verwendung von leistungsstarken einzelnen Modulen mindestens zwei Module vorhanden sind, während bei der Verwendung von kleinen Modulen, z.B. im 30 bis 40 kW-Bereich, eine Vielzahl von Modulen verwendet wird und dass ständig ein Reserve-Modul bereit steht, um den Ausfall eines der Module kompensieren zu können.

In einer, insbesondere für relativ kleine U-Boote vorgesehenen, Ausführung weisen die einzelnen Brennstoffzellen-Module eine Leistung von 30 bis 70 kW auf und haben Abmessungen in der Länge von 1200 mm bis 2000 mm, einer Breite von 400 mm bis 550 mm und einer Höhe von 400 mm bis 550 mm, wobei die Module in ein gemeinsames Haltegerüst einbringbar, vorzugsweise einschiebbar ausgebildet sind. Bei diesen Abmessungen und Leistungen ist eine besonders gute Streufeldarmut für die einzelnen Brennstoffzellen-Module in einfacher Weise erreichbar und die Module sind gleichzeitig so ausgestaltbar, dass sie auch in kleineren U-Booten mit ihrem sehr beschränkten Platz gut hantierbar sind. Bei Brennstoffzellen-Modulen muss im Gegensatz zu Akku-Blöcken, die relativ wartungsarm sind, mit einem wesentlich höheren Reparatur- und Wartungsaufwand gerechnet werden. Die einzelnen Module müssen also im U-Boot gut hantierbar ausgebildet sein.

In einer anderen Ausgestaltung der Erfindung ist vorgesehen, dass die Brennstoffzelleneinrichtung aus Brennstoffzellen-Modulen besteht, die eine Leistung von 80 bis 160 kW haben sowie Abmessungen in der Länge von 1500 mm bis 2300 mm, einer Breite von 450 mm bis 650 mm und einer Höhe von 450 mm bis 650 mm, wobei diese Module vorzugsweise ebenfalls in ein Haltegerüst einbringbar ausgebildet sind. Eine Brennstoffzelleneinrichtung mit vorgenannten großen Brennstoffzellen-Modulen wird besonders für größere, im tieferen Wasser operierende U-Boote bzw. für die Nachrüstung von U-Booten eingesetzt, da sich ein einfacherer Aufbau und eine einfachere Medienversorgung (H₂, O₂, N₂ etc.) als bei einer größeren Zahl von Modulen ergibt.

In weiterer Ausgestaltung der Erfindung ist vorgesehen, dass die Brennstoffzelleneinrichtung aus Brennstoffzellen-Modulen besteht, die einen hoch integrierten, schocksicheren Medienanschlussblock für Gase und Wasser aufweisen, der mit hoch integrierten, schocksicheren Medienkupplungen für Gase und Wasser versehen ist. Die Abdichtung der externen Medienverund -entsorgung geschieht dabei über hoch integrierte Dichtplatten für Gase und Wasser, so dass sich insgesamt eine klein bauende, schockfeste Versorgungseinheit für die externen Medien ergibt. Im Bereich der Dichtplatten sind auch die Energieversorgungsleitungen mit ihren Plus- und Minus-Polen gasdicht angeordnet. Die integrierte Medienkupplung befindet sich vorteilhaft an einer der Stirnseiten der nicht rostenden, schockfesten, gasdichten Edelstahldruckbehälter und wird schockfest mit diesen verschraubt. Insgesamt ergibt sich also eine besonders für U-Boote geeignete Ausbildung einer Brennstoffzelleneinrichtung.

Die einzelnen Brennstoffzellen-Module der Brennstoffzelleneinrichtung enthalten zwischen 20 und 500 Membranen, wobei die Membrane aus Ionen leitendem Material bestehen. So ergibt sich die erfindungsgemäß verwendete PEM-Brennstoffzelleneinrichtung. Die Zahl der Membranen ist dabei von der gewünschten Spannung der Brennstoffzellen-Module abhängig.

In weiterer Ausgestaltung der Erfindung ist vorgesehen, dass sich in den Druckbehältern der Brennstoffzellen-Module Schutzgas befindet, das mittels einer Schutzgastrocknungseinrichtung trocken gehalten wird. So werden zum einen der Isolationswiderstand der BZ-Module hoch gehalten und zum anderen auch im Inneren der Druckbehälter Korrosionsprobleme vermieden und die Lebensdauer der Brennstoffzellen-Module erheblich gesteigert. Als Schutzgas wird erfindungsgemäß N₂ verwendet.

Die erfindungsgemäße Brennstoffzelleneinrichtung ist nicht nur für neu gebaute U-Boote sondern insbesondere zur Nachrüstung von konventionellen U-Booten verwendbar. Hier kann sie ihre Vorteile in besonders guter Weise entfalten, da die Unterwasserreichweite von konventionellen U-Booten so entscheidend gesteigert werden kann. Die hohen Kosten für neue U-Boote können vermieden werden, gleichzeitig werden alle Vorteile, die sich durch die Energieerzeugung durch Brennstoffzelleneinrichtungen für die U-Boote ergeben, erreicht.

In besonders vorteilhafter Ausgestaltung der Brennstoffzelleneinrichtung ist vorgesehen, dass sie einen mit den Brennstoffzellen-Modulen zusammenwirkenden Strombegrenzer in HTS-Technik aufweist, der mit einem Leistungsschalter zusammenwirkt. Brennstoffzelleneinrichtungen bedürfen eines besonderen Schutzes, so dass sie nicht nur schockfest ausgebildet werden müssen, sondern auch elektrisch besonders geschützt werden müssen. Nur so können die sehr hohen Kosten einer Reparatur oder evtl. sogar einer Neuerstellung vermieden werden, die sich ggf. durch das Entstehen eines Lichtbogens oder auch eines einfachen Kurzschlusses ergeben könnten. Ein Strombegrenzer in HTS-Technik ist dafür besonders geeignet, wobei der Strombegrenzer mit einem Leistungsschalter zusammenwirkt. Dieser Leistungsschalter schaltet nur eine geringe Leistung, da der Strombegrenzer wirkt, so dass nach dem Ansprechen des HTS-Strombegrenzers sehr vorteilhaft kein Spannungseinbruch im Bordnetz entsteht. Auch das Auftreten eines Lichtbogens kann weitestgehend vermieden werden.

Ein HTS-Strombegrenzer, der an sich bekannt ist, arbeitet ohne Verzögerung und ohne die Erzeugung von Gasen. Er stellt die optimale Sicherung einer Brennstoffzelleneinrichtung dar und ist deshalb besonders vorteilhaft für die erfindungsgemäße Energieversorgungseinrichtung. Die physikalischen Grundlagen eines HTS-Strombegrenzers sind bereits des Längeren bekannt, nunmehr haben die HTS-Strombegrenzer jedoch eine Reife erreicht, die es erlaubt, sie mit flüssigem Stickstoff zu kühlen. Der flüssige Stickstoff kann vorteilhaft durch einen Verdichter aus dem in der Luft befindlichen Stickstoff hergestellt werden, es ist aber auch eine Mitnahme von flüssigem Stickstoff an Bord des U-Boots möglich. Hierzu weist das U-Boot vorteilhaft einen Vorratsbehälter für kryogene Flüssigkeit, insbesondere für flüssigen Stickstoff auf, der insbesondere elektrisch gekühlt wird. Es ist dabei für ein U-Boot, welches eine Brennstoffzelleneinrichtung an Bord hat, besonders günstig, wenn der HTS-Strombegrenzer mit einem Vorratsbehälter verbunden ist, dessen Verdampfungswärme zum Aufheizen des flüssigen Sauerstoffs, der für den Betrieb der Brennstoffzelleneinrichtung vorgesehen ist, benutzt wird. So ergibt sich ein vorteilhafter Energieverbund an Bord eines U-Boots mit Brennstoffzellen.

Von besonderem Vorteil ist dabei, wenn der HTS-Strombegrenzer und der Vorratsbehälter in demselben Segment wie die Energieversorgungsanlage angeordnet sind. Insbesondere bei einer Anordnung des HTS-Strombegrenzers in einem z.B. nachgerüsteten AIP-U-Bootssegment (AIP = Air Independent Propulsion) ergibt sich ein Nachrüstungssegment für das U-Boot, das in optimaler Weise die nachzurüstenden Energieversorgungskomponenten enthält, so dass diese nicht in dem ursprünglichen Bootskörper, der ja bis zum letzten Winkel ausgenutzt ist, angeordnet werden müssen.

Jeder HTS-Strombegrenzer hat im supraleitenden Zustand einen nicht messbaren, vernachlässigbar kleinen elektrischen Widerstand. Im Falle eines Stromes, der oberhalb des Bemessungsstroms liegt, steigt der elektrische Widerstand des HTS-Strombegrenzers sprungartig an, bis sein supraleitender Zustand in seinen normal leitenden Zustand überwechselt. Der HTS-Strombegrenzer bzw. dessen Supraleiter nimmt dann einen endlichen Widerstand an, bis er wieder zurückgekühlt wird. In einem Energieversorgungsnetz wird der HTS-Strombegrenzer in Verbindung mit einem galvanisch trennenden Element mit Ausschaltvermögen eingesetzt - also einem Leistungsschalter.
Das galvanisch trennende Element wird automatisch angesteuert, hierzu wird die Spannungsdifferenz benutzt, die sich im normal leitenden Zustand zwischen Ein- und Ausgangsseite des HTS-Strombegrenzers einstellt. Das Wiedereinschalten des galvanisch trennenden Elements erfolgt von Hand, wenn der Kurzschluss beseitigt und seine Beseitigung durch die Besatzung des U-Boots festgestellt ist.

In weiterer Ausgestaltung der Erfindung ist vorgesehen, dass die Brennstoffzelleneinrichtung eine Steuertafel aufweist, in der ein SIMATIC S 7-Automatisierungssystem für die Steuerung und Überwachung der Brennstoffzellen-Module angeordnet ist, wobei dem Automatisierungssystem vorteilhaft ein Smart-Spannungsmesssystem zur Messung und Überwachung der Zellspannungen der Brennstoffzellen-Module als Informationsebene dient. So ist eine besonders gute Überwachung und Steuerung der Zellspannungen und Steuerung der Brennstoffzellen-Module und damit der Leistung der Brennstoffzelleneinrichtung möglich.

Des weiteren weist die erfindungsgemäße Einrichtung SIMATIC S 7 Automatisierungskomponenten für die Steuerung und Überwachung der Brennstoffzelleneinrichtung sowie insbesondere für die Sicherheitsautomatik der Brennstoffzelleneinrichtung auf. So ergibt sich auch in Bezug auf die Steuerung und Überwachung der Brennstoffzelleneinrichtung ein hoher Sicherheitsstandard. Dazu gehört auch ein DC/DC-Wandler zur potential getrennten Versorgung der Geber und Ventile in den Brennstoffzellen-Modulen. Bedienung und Beobachtung erfolgt dabei vorteilhaft vor Ort über einen ICOS-PC, der dem Bedienen und Beobachten der Brennstoffzelleneinrichtung dient und einen vor Ort angeordneten Steuerstand der Brennstoffzelleneinrichtung bildet. Insgesamt ergibt sich also eine Brennstoffzelleneinrichtung, die mechanisch und elektrisch höchsten Sicherheitsanforderungen entspricht.

Die Erfindung wird anhand von Zeichnungen näher erläutert, aus denen, ebenso wie aus den Unteransprüchen, weitere erfindungswesentliche Einzelheiten entnehmbar sind.

Es zeigen:
- FIGUR 1: ein Brennstoffzellen-Modul im Leistungsbereich von 30 bis 40 kW ohne Druckbehälter;
- FIGUR 2: ein Brennstoffzellen-Modul im Leistungsbereich von 120 bis 140 kW im Druckbehälter und
- FIGUR 3: eine Dichtplatte zur Abdichtung der Medienräume nach außen und untereinander.

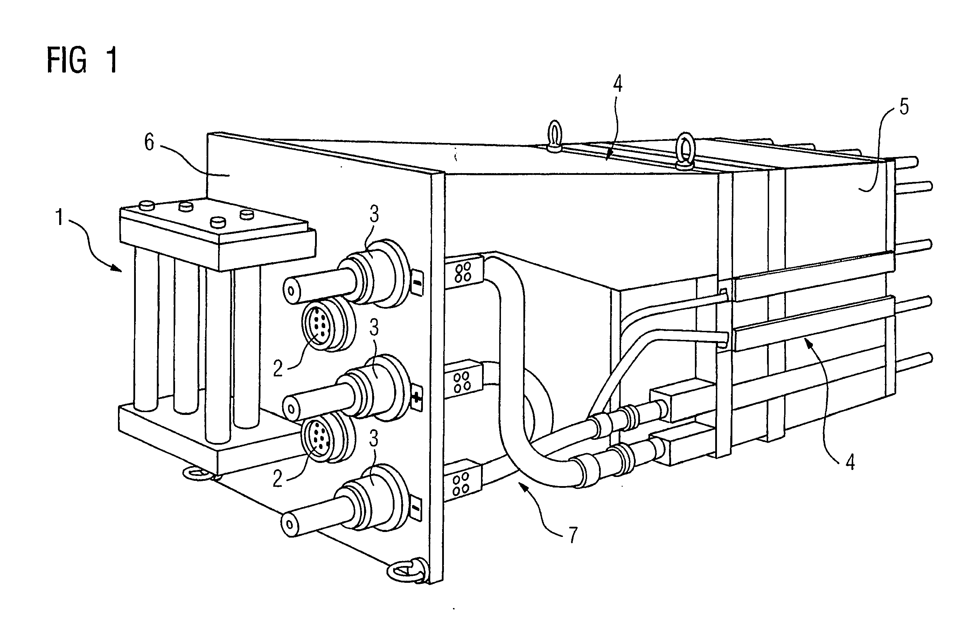

In FIGUR 1 bezeichnet 1 den integrierten Medienanschlussblock, in dem sich, wie ersichtlich, Einzelrohre als Medienkupplungen befinden. 2 bezeichnet vielpolige Steckverbinder für das Messen, Steuern und Regeln des Moduls und 3 bezeichnet die Stromanschlüsse, die mit dem U-Boot-Bordnetz verbunden sind. Die Minus-Pole befinden sich vorteilhaft oben und unten, während sich der Plus-Pol in der Mitte befindet. So ergibt sich eine streufeldarme Ausbildung. Mit 4 sind Hinweispfeile auf die Lage der modulinternen Verschienung bezeichnet. Bei der Verschienung handelt es sich um eine Vierleiteranordnung, dabei befindet sich auf jeder Seite ein Leiterpaar (1 x Minus, 1 x Plus). Mit 5 ist der Teil der Brennstoffzelleneinrichtung bezeichnet, der die Membranen zur Stromerzeugung enthält, während 7 den Anschlussbereich für den BZ-Block bezeichnet. Mit 6 ist die Frontplatte des Brennstoffzellenmoduls bezeichnet. Diese kann schockfest mit dem Edelstahldruckbehälter verbunden werden und ist ebenfalls in Edelstahl ausgeführt.

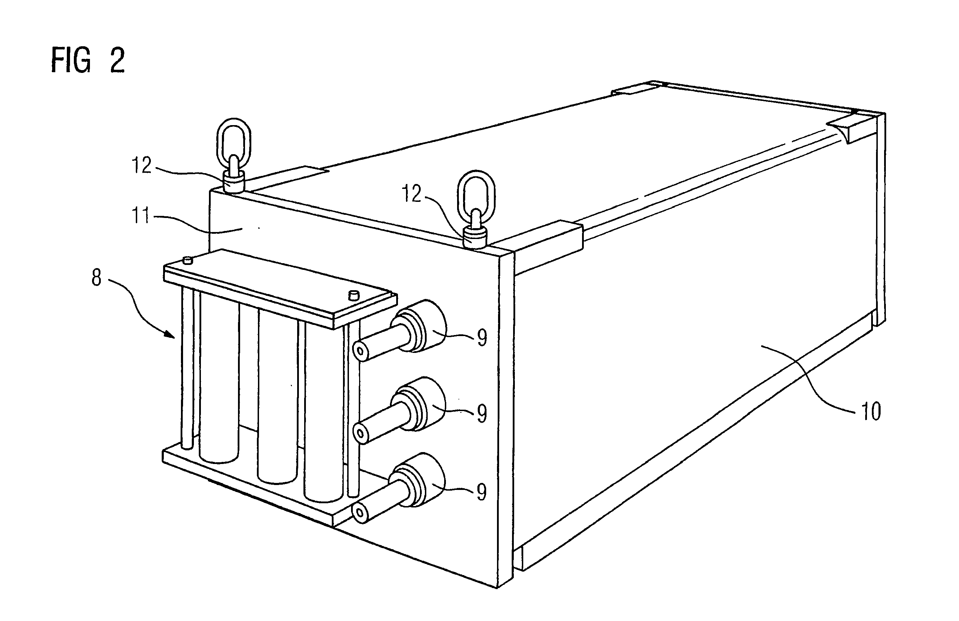

In FIGUR 2, die ein Brennstoffzellen-Modul der Leistungsgröße 120 bis 140 kW zeigt, ist der Medienanschlussblock mit 8 bezeichnet. 9 bezeichnet die Energieübertragungsanschlüsse, die wie in FIGUR 1 angeordnet sind. Auch hier ist der Plus-Pol in der Mitte und die beiden Minus-Pole befinden sich außen. Der glatte Edelstahldruckbehälter ist mit 10 bezeichnet, an seiner Frontseite befindet sich eine Flanschplatte 11, ebenfalls aus Edelstahl. Diese weist vorteilhaft ebenso wie die nicht näher gezeigte hintere Flanschplatte Gewindebohrungen zum Einschrauben von Halteösen 12 auf. So ergibt sich die bereits im Text erwähnte leichte Hantierbarkeit, da relativ kleine Hebezeuge, wie aus FIGUR 2 ersichtlich, ausreichen, um das Brennstoffzellen-Modul hantieren zu können.

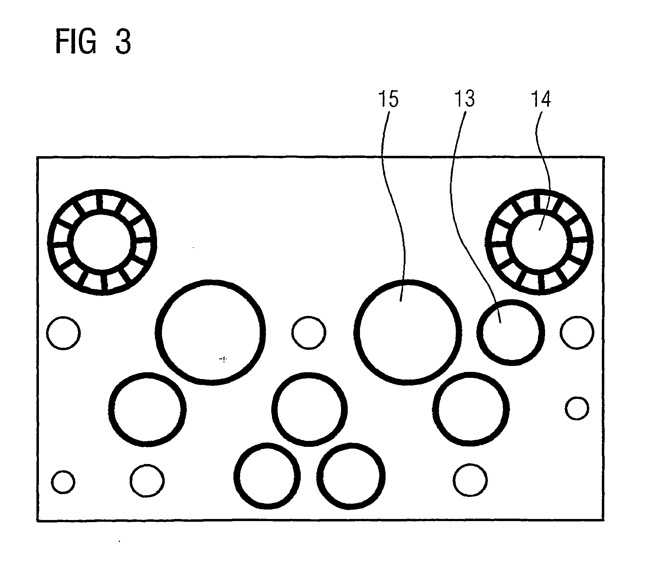

FIGUR 3 zeigt die Dichtplatte eines Brennstoffzellen-Moduls. Wie ersichtlich, sind die einzelnen Durchtrittsöffnungen 13 bzw. 14 und 15, die anforderungsgerecht dimensioniert sind, vorteilhaft mit integrierten Dichtungsringen (in der Darstellung dunkel gezeichnet) versehen. So ergibt sich eine integrierte Dichtplatte, die eine zuverlässige Trennung der unterschiedlichen Medien voneinander bewirkt. Die dargestellte Dichtplatte, die zu einem 30 bis 40 kW Brennstoffzellen-Modul gehört, weist vorteilhaft eine Breite zwischen 200 mm und 250 mm, eine Höhe zwischen 110 mm und 140 mm und eine Dicke von ca. 1 mm im Flächenbereich und von ca. 1,3 mm bis 1,5 mm im Dichtungsbereich auf. Insgesamt ergibt sich eine sehr hohe Integration der Medien-Durchlassöffnungen bei guter, schockfester Abdichtung. Eine Dichtplatte für ein Brennstoffzellen-Modul für die Leistungsgröße 120 bis 140 kW ist entsprechend größer dimensioniert.

Die Überwachung und Steuerung der Brennstoffzellenmodule erfolgt durch eine BZ-Steuertafel und eine BZ-Hilfsschalttafel. Diese kann als "stand alone"-Schalttafel, aber auch als in die vorhandene Haupt-Schalttafel des Bootes integrierte Schalttafel ausgebildet sein. Vorteilhaft erfolgt dabei die im folgenden ausgeführte Funktionsaufteilung, aus der auch weitere erfinderische Einzelheiten entnehmbar sind.

Die BZ-Steuertafel hat folgende Hauptaufgaben:
- Steuerung und Überwachung der BZ-Module (die in den BZ-Modulen eingebauten Geber und Ventile erhalten die benötigte Energie über 24VDC/DC-Wandler von der BZ-Steuertafel aus, die Hauptenergie für die vorgenannten 24VDC/DC-Wandler kommt aus der BZ-Hilfsschalttafel)
- Steuerung und Überwachung der gesamten BZ-Anlage inkl. der peripheren Ver- und Entsorgungssysteme für H₂, O₂, Kühlwasser, Stickstoff, Deionat, Vakuum etc.; alle Signale zur Ansteuerung von Gebern und Ventilen in der BZ-Anlage (ohne BZ-Module) werden zunächst zur BZ-Hilfsschalttafel geleitet und von dort an die entsprechenden Geber und Ventile weitergeleitet (die benötigte Energie für die Ansteuerung vorgenannter Geber und Ventile kommt aus der BZ-Hilfsschalttafel)
- Bedienung der BZ-Anlage vor Ort durch den in die BZ-Steuertafel eingebauten PC
- Bereitstellung der Signale für das übergeordnete Leitsystem zur Visualisierung der BZ-Anlagenzustände (nicht AIP-Nachrüstung)

In der BZ-Steuertafel sind unter anderem folgende Hardwarekomponenten eingebaut:
- Simatic S7-Automatisierungssysteme für die Steuerung und Überwachung der BZ-Module
- Simatic S7-Automatisierungssysteme für die Steuerung und Überwachung der BZ-Anlage
- Simatic S7-Automatisierungssysteme für die Sicherheitsautomatik der BZ-Anlage
- DC/DC-Wandler zur potential getrennten Versorgung der Geber und Ventile in den BZ-Modulen
- Smart Spannungsmesssysteme zur Messung und Überwachung der Zellspannungen der BZ-Module
- ICOS-PC inkl. Keyboard mit Trackball, für Bedienung und Beobachtung der BZ-Anlage vor Ort
- Optical Link Module zur Weitergabe der Signale an das übergeordnete Leitsystem zur Visualisierung der BZ-Anlagenzustände (nicht AIP-Nachrüstung)

Die BZ-Hilfsschalttafel hat folgende Hauptaufgaben:
- Versorgung der BZ-Steuertafel
- Elektrische Versorgung der gesamten Geber, Ventile, Pumpen etc., der gesamten BZ-Anlage inkl, der peripheren Ver- und Entsorgungssysteme für H₂, O₂, Kühlwasser, Stickstoff, Deionat, Vakuum etc., mit der benötigten Energie (DC 24V, DC 160 - 330V, 3 AC 6ßHz 115V)
- Bedienung (Handsteuerung) der Pumpen und der Vorwärmheizung der BZ-Anlage vor Ort
- Isolationsmessung und -anzeige der BZ-Anlage
- Sammlung und Weiterleitung von Signalen diverser Boots-Systeme, z.B. Fahranlage, Bordnetz, BZ-Anlage etc.

In der BZ-Hilfsschalttafel sind unter anderem folgende Hardwarekomponenten eingebaut:
- Messeinrichtungen zur Isolationsmessung der BZ-Anlage
- Stromversorgungsgeräte DC 330V / DC 24V
- Kondensatoren zur Spannungspufferung
- 3-polige Leistungsschalter zum Ein- und Ausschalten der Pumpen und Verbraucher mit hohem Einschaltstrom in der BZ-Anlage.

## Patentansprüche

1. Brennstoffzelleneinrichtung mit H₂-O₂-Brennstoffzellen-modulen für ein U-Boot mit zumindest einem elektrischen Propellermotor, einem Batteriesatz, einem Ladegenerator mit Antrieb und einem Energieversorgungssystem mit Stromschienen sowie Schalt- und Automatisierungseinrichtungen, wobei die Brennstoffzelleneinrichtung anforderungsgerecht Elektroenergie erzeugt, die einem Energieübertragungssystem aufgegeben wird und wobei die Brennstoffzelleneinrichtung als PEM-Einrichtung ausgebildet ist und insbesondere Elektroenergie auf dem Spannungsniveau des Energieübertragungssystems liefert,
**dadurch gekennzeichnet, dass** die PEM-Einrichtung aus Brennstoffzellenmodulen besteht, die in sich schockfest ausgebildet sind, wozu sie eine robuste innere Ausführung mit höheren Materialdimensionen als es für den Betrieb notwendig wäre und eine gegenseitige Abstützung der einzelnen Modulkomponenten aufweist und wobei diese durch schockfest ausgebildete Anschlüsse mit Sauerstoff und Wasserstoff versorgt werden, die einen hoch integrierten, schockfest ausgebildeten Medienanschlussblock mit hoch integrierten Medienkupplungen für Gase und Wasser aufweisen und wobei die Abdichtung der externen Medienver- und -entsorgung in den Medienkupplungen der Brennstoffzellen-Module über je eine hoch integrierte Dichtplatte für die Gase und Wasser erfolgt.

2. Brennstoffzelleneinrichtung nach Anspruch 1,
**dadurch gekennzeichnet, dass** sie aus Brennstoffzellen-Modulen besteht, die in nicht rostende, gasdichte Edelstahldruckbehälter einschiebbar ausgebildet sind, wobei die Edelstahldruckbehälter insbesondere glattwandig ausgebildet sind.

3. Brennstoffzelleneinrichtung nach Anspruch 1 oder 2,
**dadurch gekennzeichnet, dass** sie aus Brennstoffzellen-Modulen besteht, die ein internes, streufeldarm ausgebildetes Stromschienensystem aufweisen.

4. Brennstoffzelleneinrichtung nach Anspruch 1, 2 oder 3,
**dadurch gekennzeichnet, dass** sie aus mehreren, elektrisch in Reihe geschalteten Brennstoffzellen-Modulen und ggf. einem Reserve-Modul besteht, deren Anzahl vom Spannungsniveau des Energieversorgungssystems und der Module abhängt.

5. Brennstoffzelleneinrichtung nach einem oder mehreren der vorhergehenden Ansprüche, **dadurch gekennzeichnet, dass** sie aus Brennstoffzellen-Modulen besteht, die eine Leistung von 30 bis 70 kW haben und Abmessungen in der Länge von 1200 mm bis 2000 mm, Breite von 400 mm bis 550 mm und Höhe von 400 mm bis 550 mm aufweisen und wobei die Brennstoffzellen-Module in ein gemeinsames Haltegerüst einbringbar, vorzugsweise einschiebbar sind.

6. Brennstoffzelleneinrichtung nach einem oder mehreren der Ansprüche 1 bis 4, **dadurch gekennzeichnet, dass** sie aus Brennstoffzellen-Modulen besteht, die eine Leistung von 80 bis 160 kW haben sowie Abmessungen in der Länge von 1500 mm bis 2300 mm, Breite von 450 mm bis 650 mm und Höhe von 450 mm bis 650 mm aufweisen und wobei die Brennstoffzellen-Module in einem Haltegerüst befestigbar sind.

7. Brennstoffzelleneinrichtung nach einem oder mehreren der vorhergehenden Ansprüche, **dadurch gekennzeichnet, dass** sie aus Brennstoffzellen-Modulen besteht, die zwischen 20 und 500 Membranen enthalten, wobei die Membrane aus Ionen leitendem Material bestehen.

8. Brennstoffzelleneinrichtung nach einem oder mehreren der vorhergehenden Ansprüche, **dadurch gekennzeichnet, dass** sich in den Druckbehältern der Brennstoffzellen-Module Schutzgas befindet, das mittels einer Schutzgastrocknungseinrichtung trocken gehalten wird.

9. Brennstoffzelleneinrichtung nach einem oder mehreren der vorhergehenden Ansprüche, **dadurch gekennzeichnet, dass** sie zur Nachrüstung von konventionellen U-Booten verwendet wird.

10. Brennstoffzelleneinrichtung nach einem oder mehreren der vorhergehenden Ansprüche, insbesondere nach Anspruch 9,
**dadurch gekennzeichnet, dass** das Energieübertragungssystem des U-Boots einen mit den Brennstoffzellen-Modulen zusammenwirkenden Strombegrenzer in HTS-Technik aufweist, der mit einem Leistungsschalter zusammenwirkt.

11. Brennstoffzelleneinrichtung nach einem oder mehreren der vorhergehenden Ansprüche, insbesondere nach Anspruch 10,
**dadurch gekennzeichnet, dass** sie zumindest einen mit einem Leistungsschalter zusammenwirkenden HTS-Strombegrenzer aufweist, der mit einer kryogenen Flüssigkeit gekühlt wird.

12. Brennstoffzelleneinrichtung nach Anspruch 11,
**dadurch gekennzeichnet, dass** der HTS-Strombegrenzer mit einem Vorratsbehälter für kryogene Flüssigkeit verbunden ist, der insbesondere elektrisch gekühlt wird.

13. Brennstoffzelleneinrichtung nach Anspruch 11 oder 12,
**dadurch gekennzeichnet, dass** der HTS-Strombegrenzer mit einem Vorratsbehälter verbunden ist, dessen Verdampfungswärme zum Aufheizen des flüssigen Sauerstoffes (O₂) genutzt wird, der zum Betrieb der Brennstoffzelleneinrichtung dient.

14. Brennstoffzelleneinrichtung nach Anspruch 10, 11, 12 oder 13, **dadurch gekennzeichnet, dass** der HTS-Strombegrenzer und der Vorratsbehälter in demselben Segment des U-Boots wie die Brennstoffzellen-Module angeordnet sind.

15. Brennstoffzelleneinrichtung nach einem oder mehreren der vorhergehenden Ansprüche, **dadurch gekennzeichnet, dass** sie eine Steuertafel aufweist, in der Smart-Spannungsmesssysteme zur Messung und Überwachung der Zellspannungen der Brennstoffzellen-Module sowie ein Automatisierungssystem, vorzugsweise in Form einer SIMATIC S 7 der Firma SIEMENS für die Steuerung und Überwachung der Brennstoffzellen-Module angeordnet sind.

16. Brennstoffzelleneinrichtung nach Anspruch 15,
**dadurch gekennzeichnet, dass** in der Steuertafel ein Automatisierungssystem auf der Basis der SIMATIC S 7 von SIEMENS für die Steuerung und Überwachung der gesamten Brennstoffzelleneinrichtung sowie ein Automatisierungssystem auf der Basis der SIMATIC S 7 von SIEMENS für die Sicherheitsautomatik der Brennstoffzelleneinrichtung angeordnet ist.

## Claims

1. Fuel cell device having H₂O₂ fuel cell modules for a submarine with at least one electric propeller motor, a battery set, a charging generator with a drive and a power supply system with busbars as well as switching and automation devices, with the fuel cell device producing electrical power as required, which is passed to a power transmission system, and with the fuel cell device being in the form of a PEM device and, in particular, supplying electrical power at the voltage level of the power transmission system, **characterized in that** the PEM device comprises fuel cell modules which are intrinsically designed to be shock-resistant, for which purpose it has a robust internal design with larger material dimensions than will be necessary for operation, and the individual module components are mutually supported, and with these being supplied with oxygen and hydrogen by means of connections which are designed to be shock-resistant, which have a large-scale-integrated media connecting block, which is designed to be shock-resistant, with large-scale-integrated media couplings for gases and water, and with the external media input supply and output supply being sealed in the media couplings of the fuel cell modules, via in each case one large-scale-integrated sealing plate for the gases and water.

2. Fuel cell device according to Claim 1,
**characterized**
**in that** the fuel cell device comprises fuel cell modules which are designed such that they can be inserted into gas-tight stainless steel pressure vessels, with the stainless steel pressure vessels being designed, in particular, with smooth walls.

3. Fuel cell device according to Claim 1 or 2,
**characterized in that** the fuel cell device comprises fuel cell modules which have an internal busbar system which is designed to produce low stray fields.

4. Fuel cell device according to Claim 1, 2 or 3,
**characterized in that** the fuel cell device comprises a plurality of fuel cell modules, which are electrically connected in series, and possibly a reserve module, the number of which depends on the voltage level of the power supply system, and of the modules.

5. Fuel cell device according to one or more of the preceding claims,
**characterized**
**in that** the fuel cell device comprises fuel cell modules which have a power from 30 to 70 kW and whose dimensions comprise a length of 1200 mm to 2000 mm, a width of 400 mm to 550 mm, and a height of 400 mm to 550 mm, and in which case the fuel cell modules can be introduced, and can preferably be pushed, into a common mounting rack.

6. Fuel cell device according to one or more of Claims 1 to 4,
**characterized**
**in that** the fuel cell device comprises fuel cell modules which have a power from 80 to 160 kW and whose dimensions comprise a length of 1500 mm to 2300 mm, a width of 450 mm to 650 mm, and a height of 450 mm to 650 mm, and in which case the fuel cell modules can be mounted in a mounting rack.

7. Fuel cell device according to one or more of the preceding claims,
**characterized**
**in that** the fuel cell device comprises fuel cell modules which contain between 20 and 500 membranes, with the membranes being composed of material which conducts ions.

8. Fuel cell device according to one or more of the preceding claims,
**characterized**
**in that** the pressure vessels of the fuel cell modules contain barrier gas, which is kept dry by means of a barrier gas drying device.

9. Fuel cell device according to one or more of the preceding claims,
**characterized**
**in that** the fuel cell device is used for retrofitting of conventional submarines.

10. Fuel cell device according to one or more of the preceding claims, in particular according to Claim 9,
**characterized**
**in that** the power transmission system for the submarine has a current limiter, which interacts with the fuel cell modules, uses HTS technology, and interacts with a circuit breaker.

11. Fuel cell device according to one or more of the preceding claims, in particular according to Claim 10,
**characterized**
**in that** the fuel cell device has at least one HTS current limiter, which interacts with a circuit breaker and is cooled by means of a cryogenic liquid.

12. Fuel cell device according to Claim 11,
**characterized**
**in that** the HTS current limiter is connected to a supply container for cryogenic liquid which, in particular, is cooled electrically.

13. Fuel cell device according to Claim 11 or 12,
**characterized**
**in that** the HTS current limiter is connected to a supply container, whose vaporization heat is used to heat the liquid oxygen (O₂) which is used to operate the fuel cell device.

14. Fuel cell device according to Claim 10, 11, 12 or 13,
**characterized**
**in that** the HTS current limiter and the supply container are arranged in the same segment of the submarine as the fuel cell modules.

15. Fuel cell device according to one or more of the preceding claims,
**characterized**
**in that** the fuel cell device has a control panel in which smart voltage measurement systems are arranged for measurement and monitoring of the cell voltages of the fuel cell modules, as well as an automation system, preferably in the form of a SIMATIC S 7 from the SIEMENS Company, for controlling and monitoring the fuel cell modules.

16. Fuel cell device according to Claim 15,
**characterized**
**in that** an automation system based on the SIMATIC S 7 from SIEMENS is arranged in the control panel, for controlling and monitoring the entire fuel cell device, as well as an automation system based on the SIMATIC S 7 from SIEMENS for the automatic safety system for the fuel cell device.

## Revendications

1. Dispositif de piles à combustible comprenant des modules de piles à combustible H₂-O₂ pour un sous-marin ayant au moins un moteur électrique d'hélice, un jeu de batterie, un générateur de charge avec entraînement et un système d'alimentation en énergie ayant des barres de courant ainsi que des dispositifs de commutation et d'automatisation, le dispositif de piles à combustible produisant de l'énergie électrique conformément au besoin, énergie qui est cédée à un système de transmission de l'énergie et dans lequel le dispositif de piles à combustible est constitué en dispositif PEM et fournissant notamment de l'énergie électrique au niveau de tension du système de transmission de l'énergie,
**caractérisé en ce que** le dispositif PEM est constitué de modules de piles à combustible qui sont constitués de manière en soi à résister aux chocs, en ayant une réalisation intérieure robuste ayant des dimensions de matériaux plus grandes que cela ne serait nécessaire pour le fonctionnement et un appui réciproque des divers composants de modules et dans lequel ceux-ci sont alimentés en oxygène et en hydrogène par des raccords résistant aux chocs, qui ont un bloc de raccord de fluide très intégré et résistant aux chocs, ayant des accouplements très intégrés pour des fluides, pour des gaz et de l'eau, et dans lequel l'étanchéité de l'entrée et de la sortie extérieure pour les fluides s'effectue dans les accouplements pour les fluides de modules de piles à combustible s'effectue par respectivement une plaque d'étanchéité au gaz et à l'eau, qui est très intégrée.

2. Dispositif de piles à combustible suivant la revendication 1,
**caractérisé en ce qu'**il est constitué de modules de piles à combustible qui sont constitués de manière à pouvoir coulisser dans une tige sous pression en acier fin inoxydable et étanche au gaz, la tige sous pression en acier fin étant constituée en ayant notamment des parois lisses.

3. Dispositif de piles à combustible suivant les revendications 1 ou 2,
**caractérisé en ce qu'**il est constitué de modules de piles à combustible qui ont un système de barres de courant internes constituées en bras à champ de dispersion.

4. Dispositif de piles à combustible suivant la revendication 1, 2 ou 3,
**caractérisé en ce qu'**il est constitué de plusieurs modules de piles à combustible montés électriquement en série et le cas échéant d'un module de réserve, dont le nombre dépend du niveau de tension du système d'alimentation en énergie et des modules.

5. Dispositif de piles à combustible suivant l'une ou plusieurs des revendications précédentes,
**caractérisé en ce qu'**il est constitué de modules de piles à combustible qui ont une puissance de 30 à 70 kW et des dimensions en longueur de 1200 mm à 2000 mm, en largeur de 400 mm à 550 mm et en hauteur de 400 mm à 550 mm et les modules de piles à combustible pouvant être introduits dans une ossature de maintien commune, en pouvant de préférence y être introduits en coulissant.

6. Dispositif de piles à combustible suivant l'une ou plusieurs des revendications 1 à 4,
**caractérisé en ce qu'**il est constitué de modules de piles à combustible qui ont une puissance de 80 à 160 kW ainsi que les dimensions de 1500 mm à 2300 mm, en largeur de 450 mm à 650 mm et en hauteur de 450 à 650 mm, les modules de piles à combustible pouvant être fixés dans une ossature de maintien.

7. Dispositif de piles à combustible suivant l'une ou plusieurs des revendications précédentes,
**caractérisé en ce qu'**il est constitué de modules de piles à combustible qui contiennent entre 20 et 500 membranes, les membranes étant en matériau conducteur d'ions.

8. Dispositif de piles à combustible suivant l'une ou plusieurs des revendications précédentes,
**caractérisé en ce que** dans les cuves sous pression des modules de piles à combustible se trouve du gaz de protection, qui est maintenu à sec au moyen d'un dispositif de séchage du gaz de protection.

9. Dispositif de piles à combustible suivant l'une ou plusieurs des revendications précédentes,
**caractérisé en ce qu'**il est utilisé pour le rééquipement de sous-marins classiques.

10. Dispositif de piles à combustible suivant l'une ou plusieurs des revendications précédentes, notamment suivant la revendication 9,
**caractérisé en ce que** le système de transmission d'énergie des sous-marins a un limiteur de courant à technique HTS, qui coopère avec les modules de piles à combustible et qui coopère avec un disjoncteur.

11. Dispositif de piles à combustible suivant l'une ou plusieurs des revendications précédentes, notamment suivant la revendication 10,
**caractérisé en ce qu'**il a au moins un limiteur de courant HTS qui coopère avec un disjoncteur et qui est refroidi par un liquide cryogénique.

12. Dispositif de piles à combustible suivant la revendication 11,
**caractérisé en ce que** le limiteur de courant HTS communique avec un réservoir de liquide cryogénique, qui est refroidi notamment électriquement.

13. Dispositif de piles à combustible suivant la revendication 11 ou 12,
**caractérisé en ce que** le limiteur de courant HTS communique avec un réservoir dont la chaleur d'évaporation est utilisée pour chauffer l'oxygène (O₂) liquide qui sert à faire fonctionner le dispositif de piles à combustible.

14. Dispositif de piles à combustible suivant la revendication 10, 11, 12 ou 13,
**caractérisé en ce que** le limiteur de courant HTS et le réservoir sont disposés dans le même segment du sous-marin que les modules de piles à combustible.

15. Dispositif de piles à combustible suivant l'une ou plusieurs des revendications précédentes,
**caractérisé en ce qu'**il a un panneau de commande dans lequel sont disposés des systèmes intelligents de mesure de la tension pour la mesure et le contrôle des tensions des piles des modules de piles à combustible, ainsi qu'un système d'automatisation de préférence sous la forme d'un SIMATIC S 7 de la société SIEMENS pour la commande et le contrôle des modules de piles à combustible.

16. Dispositif de piles à combustible suivant la revendication 15,
**caractérisé en ce que** dans le panneau de commande est disposé est système d'automatisation à base du SIMATIC S 7 de SIEMENS pour la commande et le contrôle de tout le dispositif de piles à combustible, ainsi qu'un système d'automatisation à base du SMATIC S 7 de SIEMENS pour l'automatisme de sécurité du dispositif de piles à combustible.
